(19) Europäisches Patentamt / European Patent Office / Office européen des brevets

(11) **EP 2 043 026 B1**

(12) **EUROPEAN PATENT SPECIFICATION**

(45) Date of publication and mention
of the grant of the patent:
**02.11.2011 Bulletin 2011/44**

(51) Int Cl.:
*G06K 19/06* (2006.01)          *G06K 1/12* (2006.01)
*G06K 7/10* (2006.01)          *G06K 7/14* (2006.01)

(21) Application number: **07790986.9**

(22) Date of filing: **19.07.2007**

(86) International application number:
**PCT/JP2007/064232**

(87) International publication number:
**WO 2008/010544 (24.01.2008 Gazette 2008/04)**

(54) **OPTICAL SYMBOL, ARTICLE TO WHICH THE OPTICAL SYMBOL IS ATTACHED, METHOD FOR ATTACHING OPTICAL SYMBOL TO ARTICLE, AND OPTICAL RECOGNITION CODE RECOGNIZING METHOD**

OPTISCHES SYMBOL, ARTIKEL, AN DEM DAS OPTISCHE SYMBOL ANGEBRACHT IST, VERFAHREN ZUM ANBRINGEN EINES OPTISCHEN SYMBOLS AN EINEM ARTIKEL UND ERKENNUNGSVERFAHREN FÜR OPTISCHEN ERKENNUNGSCODE

SYMBOLE OPTIQUE, ARTICLE AUQUEL EST FIXÉ UN SYMBOLE OPTIQUE, PROCÉDÉ POUR FIXER UN SYMBOLE OPTIQUE À UN ARTICLE, ET PROCÉDÉ DE RECONNAISSANCE D'UN CODE PAR RECONNAISSANCE OPTIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.07.2006   JP 2006196705**
**21.06.2007   JP 2007164286**
**18.07.2007   JP 2007186573**

(43) Date of publication of application:
**01.04.2009   Bulletin 2009/14**

(60) Divisional application:
**11176952.7**

(73) Proprietor: **B-Core Inc.**
**Tokyo 101-0065 (JP)**

(72) Inventors:
• **KIMURA, Akiteru**
  **Tokyo 101-0065 (JP)**
• **MATSUDA, Masayuki**
  **Kokubunji-shi, Tokyo 185-0032 (JP)**
• **KANDO, Kunio**
  **Tokyo 101-0065 (JP)**

(74) Representative: **TBK**
**Bavariaring 4-6**
**80336 München (DE)**

(56) References cited:
**WO-A-98/45799          JP-A- 05 333 779**
**JP-A- 63 255 783          JP-A- 2002 063 142**
**JP-A- 2005 208 843**

**Description**

Technical Field

The present invention relates to an optical code to be attached to an item for information processing. More particularly, the invention relates to an optical symbol for use in the optical code, a method of attaching the optical symbol to an item, and a decoding method.

The invention further relates to a method of cutting an optical recognition code. More particularly, the invention relates to a method of recognizing (cutting) a novel optical recognition code (referred to as a 1.5D color bit code (Japanese Patent Application No. 2006-196548)) invented by the inventors of the present invention.

The invention also relates to a method of recognizing an optical recognition code. More particularly, the invention relates to a method of recognizing a novel optical recognition code (referred to as 1.5D color bit code (Japanese Patent Application No. 2006-196548)) invented by the inventors of the present invention.

Background Arts

"Background 1"

Various symbols which are attached to items to be optically read for information processing are used. For example, a so-called barcode that records information by black and white patterns in one-dimensional direction is used since a long time ago.

Optical Code Using Colors

As optical codes, codes using chromatic colors such as red and blue (for convenience, such codes using chromatic colors will be referred to as color codes herein) other than black and white are widely proposed.

Normally, in an optical code (system) using colors (using chromatic colors), when a change occurs in detection of colors in a reader, the possibility that corresponding data also changes is higher than that in a black-and-white code. There is consequently a problem that the optical code using colors is susceptible to deterioration in color, printing unevenness, illumination light, and the like.

"Background 2"

Reading of Two-Dimensional Barcode

Generally, a conventional so-called two-dimensional barcode expresses data by black and white (dark and light) segments whose positions are defined in a grid shape. Normally, a "marking pattern" (which refers to the pattern of the barcode including quiet zones) is integrated with a "marked object" as an object to which marking is applied. Therefore, in optical capturing operation (capture of data as two-dimensional image data by an area sensor or the like), a part of the "marked object" is also captured.

Even in the case where only the "marking pattern" floats in the air, usually, it is unavoidable that a background is captured together with the marking pattern. In this case, an input image other than the "marking pattern" is referred to as a "background image", and input image of the "marking pattern" is referred to as a "marking image".

To decode the "marking image" to obtain the original data, it is necessary, as the first steps,

- to distinguish the "marking image" and the "background image" from each other, and
- to recognize an accurate range of the "marking image". Such operations are usually called "cutout" of the "marking image".

The cutout in a two-dimensional barcode is typically performed as follows.

First, a predetermined area is captured by the area sensor, a specific pattern (usually, called "cutout mark") is found by image recognition from the captured image. Based on the sizes and the positional relation of the "cutout marks", a two-dimensional barcode existing range is estimated. Further, the range and the dimension of the pattern of the two-dimensional barcode are estimated, the range is segmented, and the existence of the two-dimensional barcode is recognized.

On the other hand, a classic one-dimensional barcode represents data by the thicknesses of black and white (dark and light) bars. Bars at both ends and quiet zones correspond to the "cutout marks".

However, a one-dimensional barcode has a specification in which linear "scan lines" are assumed and the dark and light patterns on the lines are read, and thus an operation of cutting out a marking pattern from the background is not actually performed. In reality, a work of aligning the "scan lines" with the bars in a one-dimensional barcode is necessary and is usually performed by visual observation of the operator.

Alternatively, a method of emitting a number of scan lines like a raster scan, placing a barcode in the range where the scan lines exist, and perform decoding is common.

Therefore, the idea of "cutout" in the one-dimensional barcode is handy as compared with the two-dimensional barcode. On the other hand, a predetermined width (length of thick and bars) is necessary for the "marking pattern" in the barcode. When the thickness is extremely small or large or in the case where arranged bars are curved, it is very difficult to perform decoding.

"Background 3"

In a conventional so-called two-dimensional barcode, a check digit for checking the barcode (detection of error and correction), which is similar to that used for a one-dimensional barcode or the like, is used.

1.5D Color Bit Code

As described above, the inventors of the present invention have invented a 1.5D color bit code as a novel two-dimensional optical recognition code, for which another patent application (Japanese Patent Application 2006-196548) was filed.

In the 1.5D color bit code, for example, band-shaped regions to be colored in three colors are provided for each of the three colors. Predetermined data is expressed by coloring or not coloring each of the band-shaped regions to be colored in a corresponding color.

In other words, the 1.5D color bit code is a code system characterized in that, in lines of three colors, whether the colors are applied or not (ON/OFF states) and digital data are associated with each other. When the band-shaped regions are scanned in the longitudinal direction, a colored part is called an ON part and a not-colored part is called an OFF part.

There is consequently an advantage that, as long as the ON/OFF timings are maintained, decoding is not influenced by some deformation in a code symbol.

The timings in this case refer to timings at the time of scanning. They are not "timings" in a temporal sense but "timings" in a spatial sense. The "code symbol" refers to a specific code itself generated based on the code system of the 1.5D color bit code and will also be simply referred to as a "symbol".

The 1.5D color bit code has a part where a read error (erroneous reading) occurs relatively easily. In some cases, it is preferable to secure the part intensively.

It is therefore preferable to use a novel check digit using the characteristic of the 1.5D color bit code, instead of the check digit used for a conventional one-dimensional barcode like other two-dimensional barcodes as described above.

Examples of Prior Art Patent Documents

For example, the patent document 1 mentioned below discloses a barcode using three colors. The barcode is constructed so that "1" is expressed when the colors are shifted in a first order, and "0" is expressed when the colors are shifted in a second order.

The patent document 2 mentioned below discloses a code realizing increased data capacity by setting the color density of each of three primary colors in a plurality of tones.

The patent document 3 mentioned below discloses a two-dimensional code in which information is divided into predetermined bit sequences according to printing capacity of a printer, and a color is selected and recorded for each of the divided bit sequences, a method of generating the two-dimensional code, and a restoring method.

The patent document 4 mentioned below discloses a code which can be used as a colored barcode as well as a general black-and-white barcode.

The patent document 5 mentioned below discloses a label printer for printing a plurality of barcodes so as to be overlapped in the same place in different colors. With the technique, the size of the label can allegedly be reduced.

The patent document 6 mentioned below discloses a technique of expressing a synthetic two-dimensional code obtained by combining a plurality of two-dimensional codes.

The patent document 7 mentioned below discloses a color multiple dot code as a two-dimensional barcode. In particular, it discloses that an error correction data region exists in a code.

The patent document 8 mentioned below discloses an apparatus for reading a two-dimensional code and reproducing information. It discloses that error correction data is included in the two-dimensional code.

Document WO98/45799 A discloses a color barcode symbol according to the preamble of claim 1 that can be accurately decoded despite severe distortions, misreads or altered symbols. The barcode is a color transition barcode having linear growth properties designed to resist the single or combined effects of: scaling distortions, perspective distortions, shear distortions, and wave distortions of both the uniform and non-uniform type distributed across the barcode's vertical or horizontal axis. The barcode is also resistant to missing symbols and altered symbols while offering high security, error checking, and double error correcting capability.

Patent Document 1
Japanese Patent Application Laid-Open No. S63-255783 (Patent No. 2521088)
Patent Document 2
Japanese Patent Application Laid-Open No. 2002-342702
Patent Document 3
Japanese Patent Application Laid-Open No. 2003-178277
Patent Document 4
Japanese Patent Application Laid-Open No. 2004-326582
Patent Document 5
Japanese Patent Application Laid-Open No. 2001-88361
Patent Document 6
Japanese Patent Application Laid-Open No. 2003-323585
Patent Document 7
Japanese Patent Application Laid-Open No. 2005-310150
Patent Document 8
Japanese Patent Application Laid-Open No. 2005-310148 (Patent No. 3908250)

Disclosure of the Invention

Problems to be solved by the Invention

"Problem 1"

As described above, a so-called one-dimensional barcode is widely practically used as a code system in which codes are arranged one-dimensionally. Although a number of kinds of one-dimensional barcodes exist, they have a code system of encoding an image using variations in the widths of black and white (dark and light) patterns which alternately appear. It is understood that a two-dimensional barcode has a similar concept when the "width" is replaced with "cell position".

Usually, a barcode is printed directly on paper or a product. Therefore, if the concept can be carried out as it is, there is no problem.

However, in circumstances that a barcode can be printed only to a distortable item or only inaccurate printing can be performed, a method relying on the widths of bars cannot be always said to be a proper method. In such a case, although there is a need for attaching an ID, the user has to give up the method in not a few cases due to the above-described problem.

On the other hand, as described above, a number of so-called color barcodes are conventionally proposed. However, most of the conventional color barcodes are directed to increase the density of data. Barcodes which realize an increased number of colors and densities to increase data density but result in lack in practicality are found here and there.

In the field of the conventional black and white barcode, the conventional techniques are used as they are, and proposals to solve the problems are hardly known. This may be due to circumstances that the method of attaching a (adhesive) seal on which a barcode is printed to an item is commonly used and a barcode is hardly directly printed on a distortable item.

However, the method of attaching a seal has the possibility of allowing illicit behavior such as re-attaching a seal or replacing with another seal. Consequently, a code which can be printed directly on an item is desirable.

The present invention has been achieved in view of such problems, and an object of the invention is to provide a code using an optical symbol which can be read at high precision even from a deformable item and in the environment that printing precision is not high.

"Problem 2"

It may be appropriate to describe the "1.5D color bit code" developed by the inventors of the present invention in comparison with a conventional two-dimensional barcode, for a two-dimensional image of an area sensor is used and the thickness and bending of a "marking pattern" are allowed.

In the following, the description will be given in such a manner.

The conventional two-dimensional barcode cutout method has been described above. However, the method has a major technical problem that cutout cannot be performed if a cutout pattern cannot be recognized accurately. Specifically, the two-dimensional barcode cannot be accurately recognized if a precondition that a two-dimensional barcode is arranged on a flat surface is not satisfied. Further, since an operation for finding a specific pattern of a "cutout mark" is performed in a complicated "background pattern", estimation of a distortion of the cutout mark, estimation of the size, allowance in the case where the flat surface is curved, and the like have to be performed by distinguishing the cutout mark from various background patterns and, usually, the process amount is enormous.

In practice, therefore, the image capture range of the area sensor is adjusted so that an occupation range of the "marking image" in the entire screen is set to be large. In actual use, an ancillary operation of the user to adjust the position (perform positioning) of the "marking image" (in the screen) while watching the screen is also often performed.

Therefore, in the case where a plurality of barcodes exists in an image, the processes and positioning are more complicated and higher precision is required. It is consequently very difficult to realize it and the method is hardly performed in practice.

The 1.5D color bit code developed by the inventors of the present invention is originally directed to recognize/trace only the order of the "ON/OFF" state of a color, and has characteristics that the code is resistive to distortion, blurring, variations, and the like in the dimension and shape.

Naturally, for reading, a 1.5D color bit code also has to be cut out from an image captured together with the background by an area sensor or the like.

However, unlike a conventional two-dimensional barcode, the 1. 5D color bit code expresses data by the order of the ON/OFF state of a color, and there is no special limitation in the dimensions and shapes. Therefore, the method of detecting a cutout mark or the like and estimating an area like in an existing two-dimensional barcode cannot be applied as it is.

The present invention has been achieved in view of the problems and an object of the invention is to propose a simple cutout method utilizing advantages of a 1.5D color bit code, resistive to distortion, blurring, variations, and the like in the dimension and shape, and different from that of a conventional two-dimensional barcode.

Another object of the present invention is to propose a method capable of easily cutting out 1.5D color bit codes even when a plurality of 1. 5D color bit codes exists in an image.

"Problem 3"

Further, as described above, in the "1.5D color bit code" developed by the inventors of the present invention, fluctuations in the thickness of band-shaped areas in a "marking pattern (the ON/OFF states of a plurality of colors in band-shaped area) " and bentness to a certain degree are allowed. Consequently, in the "1.5D color bit code", unlike a conventional two-dimensional barcode, resistance to distortion, blurring in printing, and the like is conventionally very high.

However, there is the case where data is erroneously read as another data due to deviations in the ON/OFF timings in the band-shaped area. Specifically, there is a situation that the possibility of erroneously reading data as another data is higher in a part of a specific value than data of another value.

Therefore, in a check digit employed in the 1.5D color bit code, desirably, a part (the part of the specific value) can be secured most utilizing the characteristics of the code system of the 1.5D color bit code.

The present invention has been achieved in view of the problems and an object of the invention is to provide a method of securing a part in which erroneous reading tends to occur (part of a specific value) and a check digit capable of realizing such a method utilizing the advantages of the 1.5D color bit code.

Means for Solving the Problems

"Means 1"

Means 1 achieved in view of the problem 1 will be described below.

In a code of the present invention, cells are arranged linearly, and specific data is indicated by a state (whether a color is attached or not) of elements in each of the cells. In particular, it is characterized in that a color to be attached to each of the elements is fixed.

The present invention proposes a code system which can be read if continuity of an element sequence and the linear form (topology) are maintained.

Herein, "linear" refers to a state where cells are arranged in a line without being branched or crossed. As long as the cells are lined, the line may be straight, curved, or bent.

Description of Terms

Terms in the specification will be briefly described.

First, in the specification, an item to which an optical symbol is attached may be any corporeal thing. It may not be necessarily a rigid member but may be a soft item such as food. As will be described later, the present invention proposes an optical symbol resistive to distortion and deformation of an item. A soft item such as clothes is also included in the "item" in the specification.

A container and package of an item are also included in the "item". Further, a flat- or plate-shaped item such as sheet of paper is also included in the "item" in the specification.

In the specification, the following terms are also used.

Code: A code is a standard for expressing data in a symbol. To clarify that the code is a standard, the code may also be referred to as a code system.

Symbol: A symbol is obtained by converting data based on the standard. For example, in a typical barcode, each of "black "standard" called "barcode" is called a symbol or a "barcode symbol".

Decoding: A process of obtaining original data from each of symbols based on the code is called decoding.

Reader: A reader is an apparatus for reading a symbol attached to an item. The read data is subject to the decoding. As a result of decoding, original data is obtained.

Data: Data is an object to be converted to a symbol. Data is typically numerical data, but may be character data or digital data made of 0 and 1.

Specifically, the present invention employs the following means.

(1) To solve the problems, according to an aspect of the present invention, there is provided an optical symbol as defined in claim 1.

According to another aspect, there is provided an item as defined in claim 4.

According to still another aspect, there is provided a code system as defined in claim 5.

According to further aspect, there is provided an item as defined in claim 6.

Further aspects and features of the invention are set out in the dependent claims.

[Effects of the Invention]

"Effect 1" .

According to the optical symbol of the present invention, since data is expressed according to the ON/OFF states of the elements of the configuration cells, a code system which does not exert an influence on reading of data even when the size of the configuration cell changes is obtained.

Since the size of a cell as a component of a symbol is not specified, flexibility of the size is high, and the symbol can be used also for an item whose surface is soft.

For example, a symbol can be directly printed on food such as soft meat by using food colorants. A symbol can be also directly printed on cloth and a soft item.

In a conventional optical barcode, a symbol is attached to an item by a process of affixing a seal or the like, and there is not a little possibility that data is falsified by replacing with another seal or the like. In contrast, according to the present invention, a symbol can be directly printed even on a soft item. Therefore, it is significantly difficult to replace the symbol with another symbol. As a result, according to the invention, data falsification can be prevented.

In the optical symbol and the code system using the optical symbol according to the invention, a symbol is constructed by linearly arranging a plurality of cells. As long as the symbol is linear, it may be straight or curved. Therefore, a symbol having high flexibility in design can be obtained.

Particularly, the present invention has the following characteristics.

[0073] - Since the concept of the present invention is to follow changes in elements constructing a cell, even when the range of the cell fluctuates to some degree, the reading characteristic is not degraded.

[0074] - For the same reason, even when a cell is narrow and bent, the reading characteristic is not degraded.

[0075] - Since colors are given to the elements constructing a cell, a symbol can be attached to an item by using a work of giving colors (stitching in this case) to each of the elements constructing a cell on the same line for the same color like stitching of a sawing machine. Particularly, a symbol can be attached easily by embroidering.

[0076] - Since data can be expressed by combination of colors, information density is high.

- Basically, data is constructed by color detection. Consequently, resistance to deformation is higher than a method of recording data based on the positional relation.

"Effect 2"

As described above, in the present invention, a group of cells satisfying the conditions of a "marking pattern" of an optical recognition code such as the 1.5D color bit code in an entire image is extracted from the "background image" based on the characteristics. Therefore, a code can be cut without a "cutout mark" unlike a conventional two-dimensional barcode.

Therefore, a process for finding a cutout mark does not exist. By processing an entire image by a predetermined method, a pattern corresponding to a "marking pattern" is distinguished.

It is therefore unnecessary to perform complicated image recognition for cutout like in the conventional two-dimensional barcode. A simple imaging process and image recognizing process can be achieved and a higher processing speed is expected.

Since an optical recognition code is recognized by a pattern of an entire captured, an effect such that a precise image and a complicated process for finding a cutout mark and performing positioning are unnecessary is produced. As a result, the process load of image capture is reduced, and the complicated image process operation conventionally required can be simplified. It is considered that, as a result of simplification, the operability improves.

At the same time, software of a reading device and an imaging process and an electric circuit or the like in which software is installed can use a simple configuration. Consequently, as compared with the conventional technique, lower price and smaller size can be expected.

Since the precision of marking itself may be low, it is considered that a simpler marking method and apparatus can be used.

According to the present invention, when a plurality of optical recognition codes (for example, 1.5D color bit codes) are included in the same image, without taking special means, all of optical recognition codes (for example, 1.5D color bit codes) can be captured. Therefore, even in the case of using a plurality of optical recognition codes, an optical recognition doe can be recognized by a simple reading work.

"Effect 3"

Further, as described above, according to the invention, a check digit which can concentratedly secure a part of a value which is easily erroneously read as another value in an optical recognition code can be realized.

As a result, an error in the optical recognition code can be detected efficiently.

Brief Description of Drawings

FIG. 1 is an explanatory diagram showing the relation between cells and elements.
FIG. 2 is an explanatory diagram showing an example of an optical symbol in a first embodiment.
FIG. 3 is a table showing a pattern indicative of components of data.
FIG. 4 is an explanatory diagram showing a state of an original color area after color quantization.
FIG. 5 is an explanatory diagram showing a state of color areas in a second embodiment.
FIG. 6 is an explanatory diagram showing a state of a color area group in the second embodiment.
FIG. 7 is an explanatory diagram showing a state of a 1.5D color bit code.
FIG. 8 is an explanatory diagram showing a state where code candidates are finally narrowed down in the second embodiment.
FIG. 9 shows examples of coding in a third embodiment.
FIG. 10 shows a 1. 5D color bit code obtained by the coding of FIG. 9.

Description of Reference Numerals

1010    cell
1012    element
1014    guard element
1020    optical symbol

1030    end-point cell
1032    neighboring cell
1034    configuration cell
2010    original color area
2020    color area
2030    color area group
3010    start mark
3012    end mark

Best Mode for Carrying out the Invention

"First Embodiment"

A first preferred embodiment of the present invention will be described hereinbelow with reference to the drawings.

In the embodiment, a code using an optical symbol having a form in which cells are arranged linearly is proposed. The optical symbol is a symbol in a plane shape and is to be attached to various items.

1-1 Configuration

Cell and Element

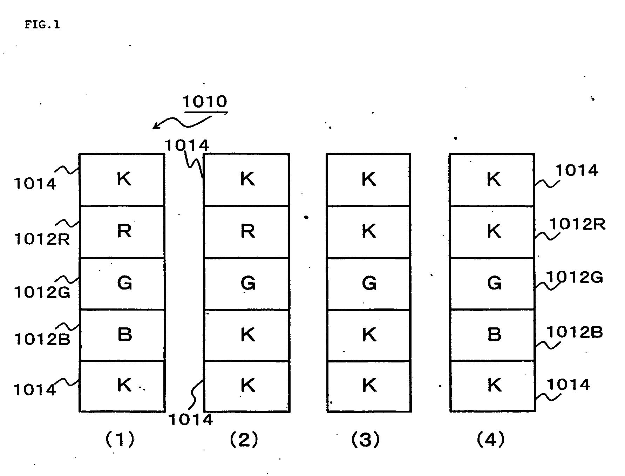

An optical symbol of the embodiment is obtained by arranging a plurality of cells. A cell is constructed by a plurality of elements. FIG. 1 is an explanatory diagram showing the relation between the cells and the elements.

In an example shown in FIG. 1, a cell 1010 includes three elements 1012R, 1012G, and 1012B. As shown in FIG. 1, guard elements 1014 are provided on the outside of the three elements 1012R, 1012G, and 1012B. The guard elements 1014 exist only to show boundaries of an optical symbol and are colored in black.

The element 1012R is an area which can be set in two states: a state where red (R) is given, and a state where red (R) is not given. The state where red (R) is not given includes two cases: the case where the ground color of an item appears as it is, and the case where black (K) is given. FIG. 1 shows the case where black (K) is given.

The state where red (R) is given to the element 1012R is referred to as "ON" or the "ON state". The state where red (R) is not given is referred to as "OFF" or the "OFF state".

The element 1012G is an area which can be set in two states: a state where green (G) is given, and a state where green (G) is not given. The state where green (G) is not given includes two cases: the case where the ground color of an item appears as it is, and the case where black (K) is given. FIG. 1 shows the case where black (K) is given.

The state where green (G) is given to the element 1012G is referred to as "ON" or the "ON state". The state where green (G) is not given is referred to as "OFF" or the "OFF state".

The element 1012B is an area which can be set in two states: a state where blue (B) is given, and a state where blue (B) is not given. The state where blue (B) is not given includes two cases: the case where the ground color of an item appears as it is, and the case where black (K) is given. FIG. 1 shows the case where black (K) is given.

The state where blue (B) is given to the element 1012B is referred to as "ON" or the "ON state". The state where blue (B) is not given is referred to as "OFF" or the "OFF state".

Kinds of Cell

A single optical symbol 1020 (hereinbelow, also simply referred to as symbol 1020) is constructed by arranging a plurality of such cells 1010. Three kinds of cells exist in one optical symbol.

(1) End-Point Cell

End-point cells 1030 are cells positioned at a start point and an end point of a sequence. Therefore, one end-point cell 1030 exists at each of the start and end points, that is, total two end-point cells 1030 exist in one optical symbol 1020. The end-point cell 1030 indicative of a start point will be referred to as a start cell. The end-point cell 1030 indicative of an end point will be referred to as an end cell.

(2) Neighboring Cell

A neighboring cell 1032 is one or more cells neighboring the end-point cell 1030. The number of the neighboring cells 1032 and the state of the elements may be in various modes. In the embodiment, an example of using the neighboring cells 1032 for identifying the start and end points and other examples will be described in detail later.

(3) Configuration Cell

A configuration cell 1034 is a cell indicative of data. There are various methods of expressing data. In the embodiment, an example of expressing data of one digit by three cells will be described in detail later.

Linear Shape

The optical symbol 1020 of the embodiment is constructed by arranging the cells 1012 linearly. The linear shape may be straight or curved. As long as a neighboring cell 1012 can be traced, any line may be employed.

Example of Optical Symbol

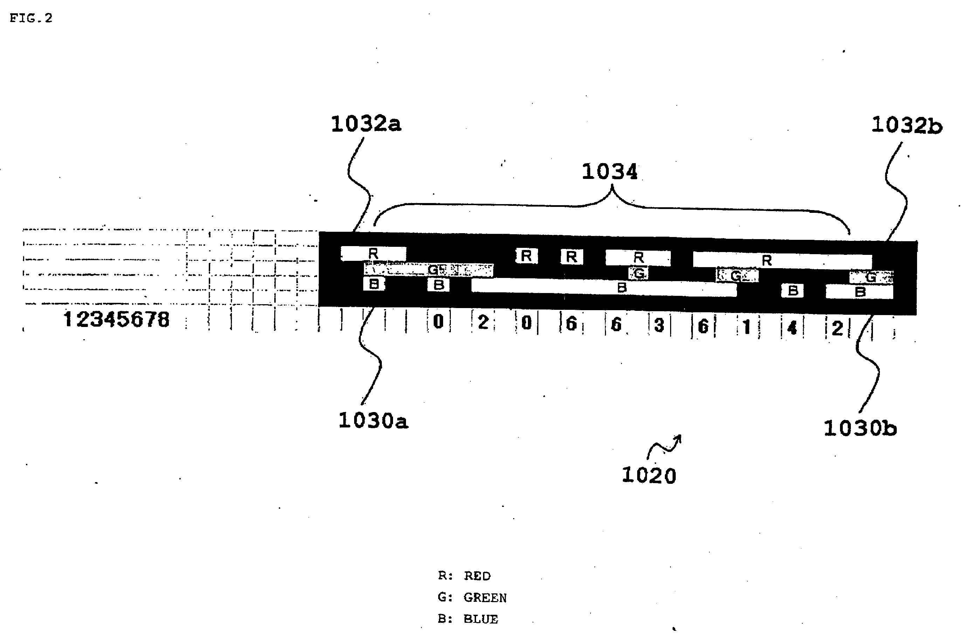

FIG. 2 shows an example of an optical symbol 1020 of the embodiment. The optical symbol 1020 expresses "12345678" (in decimal). "12345678" is represented as "206636142" in septimal notation. In the embodiment, the septimal notation "206636142" is expressed in practice.

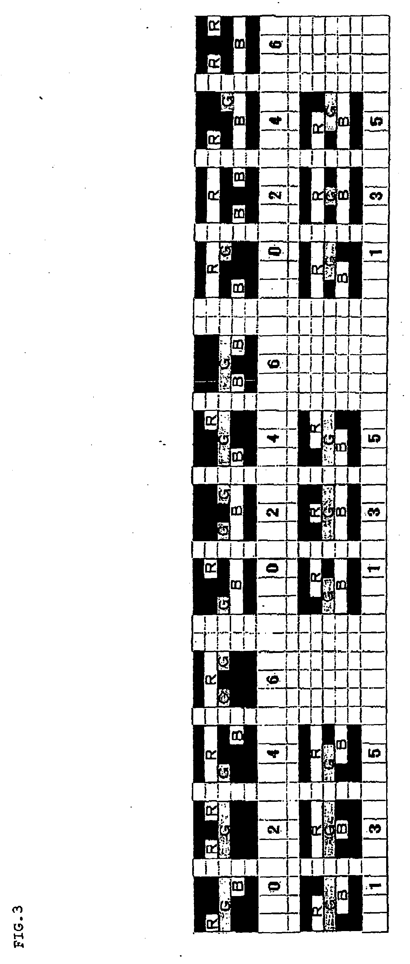

As described above, data is expressed in septimal notation in the embodiment. The values of the digits of the septimal notation, that is, the components 0, 1, 2, 3, 4, 5, and 6 are determined by the formats shown in FIG. 3.

Specifically, the value of the cell 1010 is determined by combination of the elements of the cell 1010, an immediately preceding cell 1010, and a cell 1010 preceding to the immediately preceding cell (referred to as two-cell-preceding cell). In the embodiment, a cell having a value (the cell 1010) exists every other cell.

As shown in FIG. 3, there are three ways to express the number in each digit. By selecting a state of the cell according to the states in the two-cell-preceding cell and the immediately preceding cell, a desired number can be expressed.

Further, in the embodiment, as shown in FIG. 3, only one element 1012 changes in the elements 1012 of the neighboring cell 1010. As a result, in the case of decoding the optical symbol 1020 to obtain the original data, a read error can be reduced.

In the case of permitting a change in the state of two or more elements 1012, at the time of tracing the state of the elements 1012 of the cell 1010, an unexpected intermediate state may be erroneously read due to the influence of the reading timing. In particular, in the embodiment, since the width of the cell 1012 is not specified, the possibility of read error is high.

In the embodiment, since the horizontal width of the cell 1012 is not specified, the value of the symbol 1010 can be read even from a flexible item to which the symbol 1020 is attached. Therefore, in the embodiment, the horizontal width of the cell 1012 is not specified and a change in color is regarded as detection of an adjacent cell. From this viewpoint, in the embodiment, the state of only one element 1012 in the neighboring cell 1010 changes. It is understood from FIG. 3 that, also in assignment of the numbers shown in FIG. 3, the state of only one element 1012 in a neighboring cell 1010 changes.

Further, in the embodiment, the cell whose elements are OFF, that is, whose elements are all black is permitted to be used only as the end-point cells 1030. A cell whose elements are all OFF is not used as the other neighboring cells 1032 and the configuration cell 1034. If a cell whose elements are all OFF is used, continuity of the cells 1010 is lost, and unity as one symbol 1020 lacks.

Start Point and End Point

The start point (at the left end) is expressed by a cell whose three elements are OFF and a neighboring cell whose R is ON. Specifically, the start point is expressed by combination of an end-point cell 1030a whose three elements 1012 are OFF and a neighboring cell 1032a in which only 1012R is ON (see FIG. 2). In the embodiment, since the left end is the start point, the end-point cell 1030a is a start cell.

The end point (at the right end) is expressed by a cell whose three elements are OFF and a neighboring cell in which G and B are ON. Specifically, the end point is expressed by combination of an end-point cell 1030b whose three elements 1012 are OFF and a neighboring cell 1032b in which 1012G and 1012R are ON (see FIG. 2). In the embodiment, since the right end is the end point, the end-point cell 1030b is an end cell.

In the embodiment as described above, the start and end points can be identified by the details of the end-point cell 1030 and the neighboring cell 1032.

#### Way to Start

In the start part at the left end, there are three ways to start. By using the ways, plus, minus, parity, or the like can be distinguished from each other without adding a new cell 1010.

In the above-described example,

(1) "end-point cell 1030" + "element 1012 of R is in the ON state" is used as indication of the start point. "End-point cell 1030" + "elements 1012 of B and G are in the ON state" is used as indication of the end point.

(2) Similarly, "end-point cell 1030" + "element 1012 of G is in the ON state" is used as indication of the start point. "End-point cell 1030" + "elements 1012 of B and R are in the ON state" is used as indication of the end point.

(3) It is also preferable that "end-point cell 1030" + "element 1012 of B is in the ON state" is used as indication of the start point. "End-point cell 1030" + "elements 1012 of G and R are in the ON state" is used as indication of the end point.

It is preferable to properly select a method from the above-described three methods according to setting of a parity and the like.

#### Other Usages of Neighboring Cell

By adding another neighboring cell 1032, a check digit, control of the number of digits, and the like can be realized.

#### 1-2 Application to Item and Decoding

#### 1-2-1 Attachment of Optical Symbol to Item

A preferable flow of the processes of generating the optical symbol 1020 and attaching it to an item is as follows.

(1) The optical symbol 1020 is generated based on data and based on a code system employed.

(2) The generated optical symbol 1020 is attached to an item. The attaching operation is preferably the following processes (a) to (c).

(a) The optical symbol 1020 is printed to an item. It is directly printed to an item, a package or container of an item, or the like by using a predetermined printer, a printing apparatus, or the like. As described above, since the optical symbol 1020 of the embodiment has high resistance to distortion, color degradation, and the like, even if an item is deformed or color degradation or fading occurs due to a change with time, high reading precision is realized. For a similar reason, it is also preferable to print the optical symbol 1020 of the embodiment directly to food or the like. When the optical symbol 1020 is directly printed, the possibility of re-attachment or the like of the optical symbol 1020 is low, an illegal act or the like can be prevented, and very preferable characteristics from the viewpoint of assuring safety of food can be provided.

(b) The optical symbol 1020 is directly embroidered to an item with a colored thread. In particular, in the embodiment, the cells 1010 are arranged so that the elements of the same kind are adjacent to each other. Specifically, the cells 1010 are arranged so that the elements 1012R of R are adjacent to each other, the elements 1012G of G are adjacent to each other, and the elements 1012B of B are adjacent to each other. Therefore, by doing embroidery with thread of R (red) based on the ON/OFF state of the element 1012R of R, the state of the element 1012R of R can be given to an item. Similarly, by doing embroidery with thread of G (green) based on the ON/OFF state of the element of G, the state of the element 1012G of G can be given to an item. The embroidery is performed similarly with respect to B (blue).

(c) It is also possible to print the generated optical symbol 1020 onto an (adhesive) seal and adhere the seal to an item.

#### 1-2-2 Decoding of Optical Symbol

An operation of reading the optical symbol 1020 and restoring the original data is called decoding. Although there are various procedures for decoding, a typical preferable example is as follows.

(1) An image of a predetermined item including the optical symbol 1010 is captured by a CCD camera or the like and taken as image data.

The CCD camera is a typical example of a sensor called an area sensor. Image data may be captured by another area sensor.

(2) From the image data, the following is searched.

(a) the end-point cells 1030a and 1030b,
(b) the neighboring cell 1032a in which only the R element 1012R is in the ON state, neighboring with the end-point cell 1030a, and

(c) the neighboring cell 1032b in which only the B element 1012B and the G element 1012G are in the ON state, neighboring with the end-point cell 1030b

The start point is detected by finding the end-point cell 1030a and the neighboring cell 1032a which neighbors the end-point cell 1030a and in which only the R element 1012 is ON. The end point is detected by finding the end-point cell 1030b and the neighboring cell 1032b which neighbors the end-point cell 1030b and in which only the B element and the G element are ON.

(3) The continuity of the configuration cells 1034 connecting the neighboring cells 1032a and 1032b is traced and specified.

In the trace, a state change in the elements 1012 in the configuration cells 1034 is always observed. When a change occurs in the state of any of the elements 1012, shift to a new configuration cell 1034 crossing the border of the configuration cell 1034 is determined.

As described above, in the embodiment, the position and range of the cell 1012 are not determined by the size of the cell 1012, but shift to a new cell 1012 is determined by a change in the state, that is, a change in color. As a result, even if distortion or the like occurs in the surface of an item and a change occurs in the size of the cell 1012, reading precision can be maintained high.

(4) A white area in an image is detected as excessive light by total reflection, and it is determined that the area part is not the optical symbol 1010.

(5) An image is averaged every predetermined area, and the influence of components such as noise, fine shadow, dirt, and the like is eliminated. In short, noise elimination by filtering is performed. Various conventionally known filtering means such as a median filter can be used.

(6) It is determined that a part other than linear continuous parts in which the configuration cells 1034 are continued (the surface part of the item other than the configuration cells 1034) is not the optical symbol 1020 according to the situations such as shade and the ground color.

(7) It is also preferable to use the difference of images obtained while changing the way of applying illumination and the like.

(8) The division (border) of the cells 1010 is detected from the ON/OFF states of the element 1012, the values of the cells 1010 are decoded according to the decoding specification to perform encoding. After that, the data is checked. In the patent, decoding will be called encoding.

Calibration

Further, it is characteristic in the embodiment that calibration of a color at the time of reading is performed by using three colors appearing in the neighboring cell 1032. By performing the calibration, reliability can be further improved.

In the embodiment, the colors of the three elements 1012 correspond to R, G, and B. It is also preferable that the colors correspond to three colors of Y, M, and C according to the conditions of a reader, an illumination, a tag, and the like

By such a method, decoding of the optical symbol 1020 is executed.

1-3 Summary

As descried above, the code system proposed in the embodiment has the following characteristics.

As colors used, only colors pure to a reader of a three-primary-color-system can be used. The system has a wide tolerance to color degradation and variations in illumination, printing, and the like.

· Since the concept is to follow only changes in the elements 1012 constructing the cell 1010, even when the range of the cell 1010 fluctuates to some degree, the reading characteristic is not hindered.

· For the same reason, even when a cell is narrow and bent, the reading characteristic is not hindered.

· Since colors are given to the elements 1012 constructing the cell 1010, a symbol 1020 can be attached by using a work of intermittently giving colors (stitching in this case) on the same line of the same color like stitching of a sawing machine.

· Since data can be expressed by combination of colors, information density is high.

· Basically, data is constructed by color detection. Consequently, the code system has the characteristic that resistance to deformation is higher than that of a method of using the same color for all of the elements 1012 in the code and recording data based on the positional relations of the elements 1012 such as up, middle, and down.

1-4 Modification and Application Examples

Although an example in which three elements 1012 are included in one cell 1010 has been described, four, five, or more elements 1012 may be included. In this case, obviously, four, five, or more colors are used. Two elements 1012 may be included in one cell 1010.

"Second Embodiment"

With reference to the drawings, a second preferred embodiment of the present invention will be described in detail.

2-1 Outline of 1.5D Color Bit Code

First, outline of the 1.5D color bit code developed by the inventors of the present invention will now be described. The 1.5D color bit code described here uses, for example, three colors as marking colors. The three colors are, for example, R (red), G (green), and B (blue) (or C, M, and Y). The quiet color in the quiet zone is, for example, W (white).
In the 1.5D color bit code, three lines of different colors are arranged in parallel at almost equal intervals.
Each of the three lines is interrupted in some places, and the interrupted parts have a color (that is, W) corresponding to the quiet zone. The interrupted parts in the lines including both ends are regarded as color change parts which will be referred to as the "ON/OFF" parts. The interruption means absence of the marking color (R, G, B, or the like) and appearance of color (W) other than the marking color.
Data is expressed by the position relation in the "ON/OFF" parts in the three lines.
All of the three colors are not interrupted in the intermediate portion other than the both ends.
The sequence of the three colors and the rule of the positional relation of "ON/OFF" are specified by data or a check method.
The range constructed by one color sandwiched in the interrupted part (the part which is not colored) in each line will be referred to as a "cell", and a part sandwiched by cells in the line will be referred to as an "occultation part". Therefore, each line is constructed by the "cells" and the "occultation parts". A "marking pattern" constructing once 1.5D color bit code is constructed by predetermined number of cells. The conclusion is mathematically derived from the pattern definition of the 1.5D color bit code (the details will not be described).
The "marking pattern" is surrounded by a quiet zone of the determined color (W) more than a predetermined range.
The outline of the 1.5D color bit code has been described above. The 1.5D color bit code is generated based on such conditions.

2-2 Cutting Process

(1) Division of Color Area

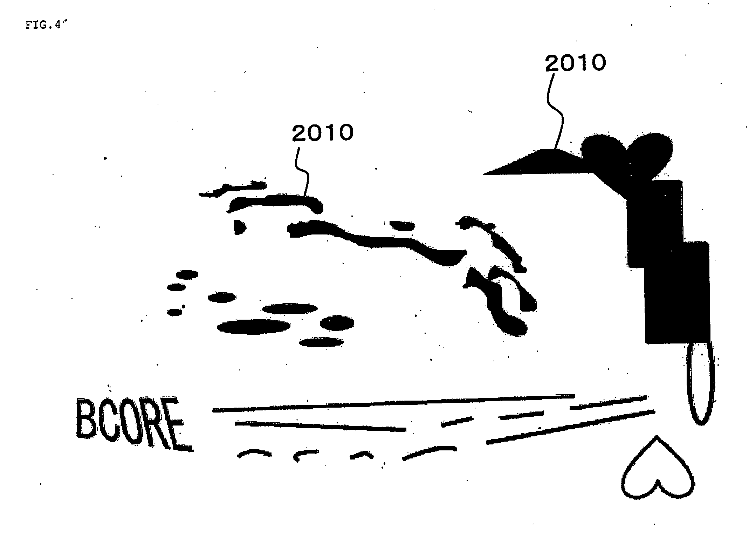

(a) First, an image including the 1.5D color bit code is captured by image pickup means such as an area sensor.
(b) Next, the image is divided into areas of a plurality of colors based on definition. In the embodiment, an example of dividing the image into blue, red, green, and white will be described. The embodiment will be described on assumption that the 1.5D color bit code is a line of "cells" of blue, red, and green, and the number of "cells" is eight.
An "original image" originally captured is constructed by various colors including the background, and the patterns are also various. A "color quantization process" of dividing the colors into blue, red, green, and achromatic color in the color space, and applying the color of each of pixels to any of areas is performed.
The colors (blue, red, and green) constructing the 1.5D color bit code are colors defined as a marking pattern and are in a "marking color range" as a predetermined range which is set in a color space in consideration of variations in illumination, coloration, color degradation, and the like.
The achromatic color is defined as a color out of the "marking color range" and includes the color of a quiet zone.
At the time of performing the "color quantization process" on the "original image" as described above, entry of noise components cannot be usually avoided. Consequently, a common noise eliminating process such as "noise eliminating process" of adjusting an abnormal change in color in a very small region corresponding to noise to the color in the periphery, averaging colors, or the like is performed in advance.
As a result of performing the color quantization process as described above, an image as shown in FIG. 4 is obtained.
In FIG. 4, a "background pattern" which is intentionally similar to a 1.5D color bit code is shown. The number of a color bit code to be detected in FIG. 4 is only one.

(2) Color Area Enlargement of Each Color

After the "color quantization process" is performed, predetermined width is added to the area of each of the colors (referred to as original color area 2010) to perform the "color area enlargement". The process is a sort of "widening" process of adding pixels of a few dots to the original color area 2010, and is a process conventionally known in image processing such as thickening of a line segment.

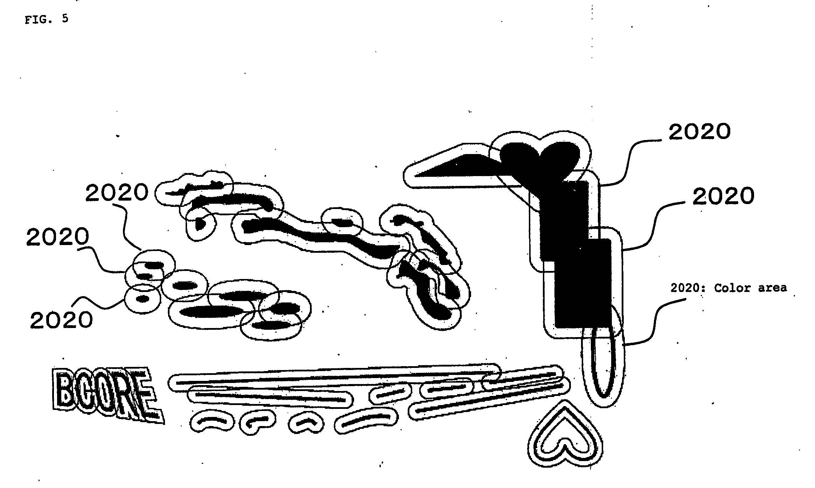

FIG. 5 shows the state of color areas 2020 subjected to the color area enlargement. In FIG. 5, contours of the actually enlarged areas are additionally written to FIG. 4.

(3) Formation of "Color Area Group"

By collecting the color areas 2020 which are in contact with each other, a "color area group" is generated. As a result, the entire image is divided into some "color area groups".

By the process, the "marking image" as an object to be recognized becomes part of at least one "color area group". A check to see whether predetermined areas are in contact with each other, that is, neighboring each other or not is widely executed as a basic image process. It is easy for a person skilled in the art to make a computer perform such a process.

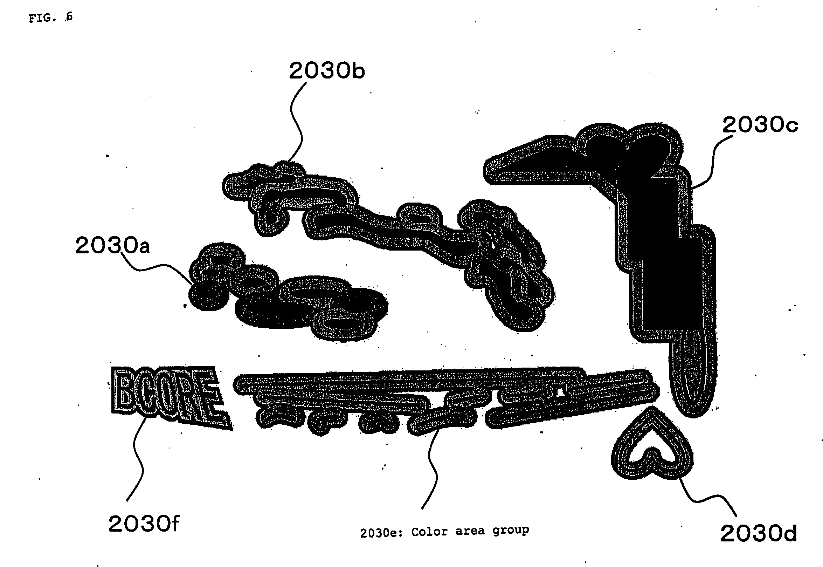

FIG. 6 shows a state of color area groups 2030 generated as described above. In the example of FIG. 6, six color area groups 2030 are generated (2030a, 2030b, 2030c, 2030d, 2030e, and 2030f). The object to be recognized is the color area group 2030b.

As described above in the definition of the 1.5D color bit code, "cell lines of colors in a marking pattern are arranged at almost equal intervals".

To group areas of the 1.5D color bit codes, a predetermined white area (quiet zone) is necessary in the periphery. This point is described above in the definition of the 1.5D color bit code that "the marking pattern is surrounded by a quiet zone of the determined color more than a predetermined range".

(4) Narrowing of Code Candidates (Elimination of Non-Code Area)

In the example shown in FIG. 6, six color area groups 2030 are generated and are candidates of a code symbol (also simply referred to as code). To retrieve an object to be recognized from the candidates, the code candidates are narrowed.

(a) Narrowing by The Number of Color Areas

As a numeric condition of the "color areas" forming a color area group, there is a rule for the 1.5D color bit code that "the numbers of "color areas" forming codes are the same when the numbers of digits are the same". For convenience, the rule will be referred to as rule 1.

Using the rule 1, the code candidates can be further narrowed. Specifically, only the candidates of the correct number of areas are left and the other candidates are excluded.

It will be proved that the rule 1 is satisfied.

Proof

First, terms will be described. Start of a red band will be referred to as R-ON, and start of occultation of the red band will be referred to as R-OFF. Similarly, start of a blue band will be referred to as B-ON, and start of occultation of the blue band will be referred to as B-OFF. Start of a green band will be referred to as G-ON, and occultation of the green band will be referred to as G-OFF.

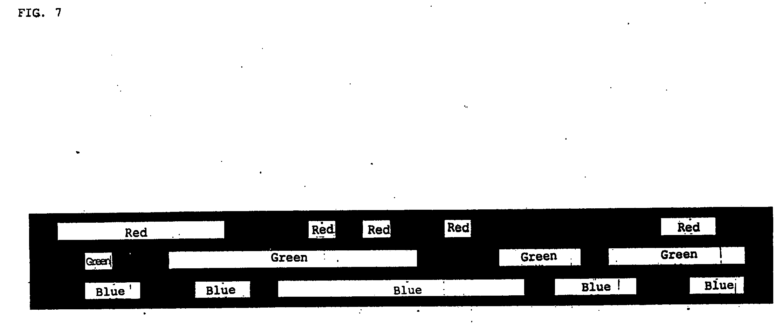

FIG. 7 shows an example of a typical 1.5D color bit code. In the case of FIG. 7, subsequent to start end marks of R-ON, G-ON, and B-ON from the left, cells are lined as follows. A start mark is made of two cells.

1step: G-OFF
2step: B-OFF
3step: G-ON
4step: B-ON
5step: R-OFF
6step: B-OFF
7step: B-ON

8step: B-OFF
9step: R-ON
10step: R-OFF
11step: R-ON
12step: R-OFF
13step: G-OFF
14step: R-ON
15step: R-OFF
16step: G-ON
17step: B-OFF
18step: B-ON
19step: G-OFF
20step: G-ON
21step: B-OFF
22step: R-ON
23step: B-ON

After that, the end mark follows. The end mark is made of the following two cells.
R-OFF
G, B-OFF

Since the number of digits is determined by the number of steps, description will be given on precondition that the number of digits used and the number of steps are known as specifications.

The mark shape of each of the start end and the terminating end is determined (in the example to be described, the specification that three lines of R, G, and B appear just before 1step and just after 23step is employed).

Since the appearing way of R, G, and B is the same at the start and terminating ends, the difference between the number of ON times and the number of OFF times of each color is determined (in the example, the number of ON times and the number of OFF times are the same).

From the left, a new color area of each color starts at ON and the ground color appears at OFF.

That is, the number of steps (that is, the number of digits) is determined, and the difference between the number of ON times and the number of OFF times is determined. Since the number of color areas is given by the number of ON times, the number of color areas is obviously constant.

End of Proof

(b) Narrowing by Alignment Rule of 1.5D Color Bit Codes

There is rule 2 that "definition of the 1.5D color bit code "each of the three colors is turned ON/OFF, and all of the three colors are not in the OFF state"". The rule is, strictly, definition of the 1.5D color bit code.

(c) Test of Parallel Arrangement of Color Bands

The 1.5D color bit code used in the embodiment serves as an optical recognition code in which a plurality of color bands are arranged in parallel, and the colors appear (ON state), and are occluded (OFF state).

Basically, (the color areas of) the same colors forming a group are supposed to be arranged in parallel.

In the step, the parallel arrangement is tested.

Specifically, the following condition is tested.

"Condition"

The color areas are connected to each other with lines (like R-R-R, G-G-G). When arbitrary two lines (like R and B, B and G, and G and R) are selected from the three lines, whether the number of intersection points of the selected two lines is even number (including 0) or not, whether the number of intersection points is even number (including 0) or odd number is tested.

The "line" connects the gravity centers or centers of the color areas. The "line" may be a straight line (line segment) or curve. In the case of a curve, preferably, a smooth curve connecting the centers or the like of the color areas is preferable. For example, it is suitable to use a spline curve, a Bezier curve, or the like.

In the step, codes which do not satisfy the condition are eliminated, and are narrowed as candidates of the code symbol. That is, a code having odd number of intersection points is eliminated from the candidates of the code.

The condition in the step "e" comes from the definition of the 1.5D color bit code that "three lines of different colors which can be regarded as one line are arranged in parallel at almost equal intervals".

By checking the rules; (a) the number of color areas, (b) the alignment rule of the 1.5D color bit codes, and (c) whether the parallel arrangement of color bands is satisfied or not, the candidates of codes can be further narrowed.

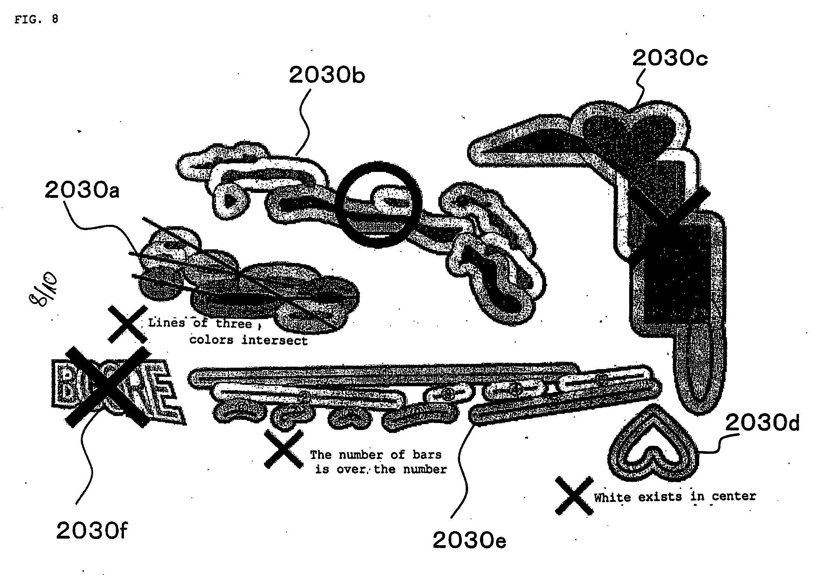

FIG. 8 shows the result of the candidate finally left after the series of narrowing processes. In FIG. 8, the color area group 2030a is excluded from the candidates by the check of the parallel arrangement. The color area group 2030c is excluded from candidates for a reason that the number of color areas constructing the color area group 2030c does not satisfy the condition. The color area group 2030d is also excluded from the candidates for a reason that there is a white area in the center. The color area group 2030e is excluded from the candidates for a reason that the number of color areas constructing the group is too large. The rule color area group 2030f is also excluded from the candidates for a reason that the number of color areas constructing the group does not satisfy the condition.

Finally, only the color area group 2030b remains and is recognized as the 1.5D color bit code.

## 2-3 Recognizing Process

By the series of processes, a color area group estimated as the 1.5D color bit code from the color area groups is decoded to obtain original data. As described above, an image is captured, one or more color area groups estimated as code symbols are obtained from the captured image, the decoding process is executed on the obtained one or more color area groups, and original data is output. The series of processes will be referred to as "recognizing process".

Decoding is computation opposite to encoding of data and is performed according to law of signs.

## 2-4 Computer and Software

The above-described series of processes is realized by making a computer execute a predetermined program. In this case, the computer servers as a 1.5D color bit code cutting apparatus. When the computer performs the decoding process on a cut color area group and outputs original data, the computer can be referred to as a 1.5D color bit code recognizing apparatus.

It is preferable to construct the apparatus by image pickup means such as a CCD camera, a video camera, or the like, a computer, and the like. Preferably, the processes and the operations described above are realized by a program of the computer.

Most of the processes are conventionally known processes such as a process of checking the state of arrangement of areas, enlarging process, and the like. It is easy for a person skilled in the art to generate a program for performing the operations on a computer.

Preferably, such a program is stored in storing means such as a hard disk on a computer or the like and is also preferable to store in a storing medium such as a CD ROM, DVD ROM, or the like. It is also preferable to employ a form of pre-storing the program on a server and using the program from the server by a client computer.

As the decoding process, the conventional decoding process can be used as it is.

## 2-5 Modification

Although the 1.5D color bit code has been mainly described above as an example, the invention may be applied to an optical recognition code made of a plurality of color areas.

For example, it is considered that the generation of candidates by arrangement of color areas can be widely applied to the optical recognition codes. It is also considered that enlargement of an area may be applied to an optical recognition code made of a plurality of color areas.

Third Embodiment

A preferred third embodiment of the present invention will be described below with reference to the drawings.

## 3-1 Outline of 1.5D Color Bit Code

First, outline of the 1.5D color bit code developed by the inventors of the present invention will be described. The 1.5D color bit code described here uses, for example, three colors as marking colors. The three colors are, for example, R (red), G (green), and B (blue) (or C, M, and Y). The quiet color in the quiet zone is, for example, K (black).

In the 1.5D color bit code, three lines of different colors are arranged in parallel at almost equal intervals. Each of the three lines is interrupted in some places, and the interrupted parts have a color (that is, K (black)) corresponding to the quiet zone. The interrupted parts in the lines including both ends are regarded as color change parts which will be referred to as the "ON/OFF" parts. The interruption means absence of the marking color (R, G, B, or the like) and appearance of color (K (black)) other than the marking colors.

In the 1.5D color bit code, data is expressed by the position relation in the "ON/OFF" parts in the lines of three colors. All of the three colors are not interrupted in the intermediate portion other than the both ends. The sequence of the three colors and the rule of the positional relation of "ON/OFF" are specified by data or a check method. That is, error detection, error correction, and the like are determined separately according to a use.

The "marking pattern" is surrounded by a quiet zone of a determined color (for example, K (black)) more than a predetermined range.

Cell and Element

The ON/OFF unit of a color is referred to as a cell. One cell includes areas (referred to as elements) of three colors. By arranging a plurality of cells in a line so that elements of the same color are adjacent to each other, a 1.5D color bit code is obtained. Since the elements of the same color are adjacent to each other, a band-shaped area of the same color is constructed. The band-shaped area corresponds to "three lines of different colors" described above.

For example, in a cell, the element R is turned on, the element B is turned off, and the element G is turned on. In the neighboring cell, the element R is turned on, the element B is turned off, and the element G is turned off. In such a manner, the colors are turned on/off.

In neighboring cells, only one element (that is, only one color) is different. By the change, the border between the cells can be detected by a scan.

The outline of the 1.5D color bit code has been described above. The 1.5D color bit code is generated under the conditions as described above.

3-2 Example of Coding

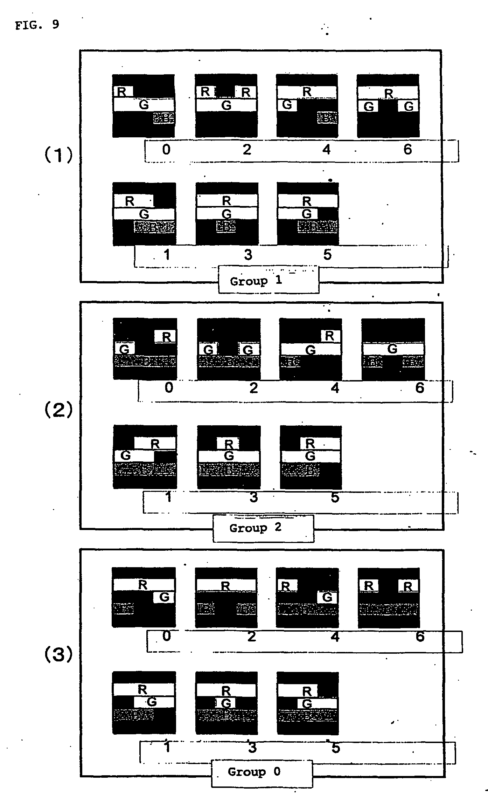

FIG. 9 shows a typical coding example of the 1.5D color bit code.

In the example of FIG. 9, one number is expressed by three cells. In the example, data is expressed in septimal notation. A block of three cells expresses any of the numbers 0 to 6.

As shown in FIG. 9, a block of three cells always starts from a state where two colors are on (the left end is "start"), and ends in a state where two colors are on (the right end is "end").

Specifically, each of numerical values 0 to 6 is expressed by a combination of 2-color ON (start) - 3-color ON - 2-color ON (end) or a combination of 2-color ON - 1-color ON - 2-color ON. In the following, it is assumed that all of such arrangements are in order from the left end (start) to the right end (end). The left end, the right end, the like will not be described.

As shown in FIG. 9, the combinations of three cells are divided in three groups according to the combinations of two colors at the left end. FIG. 9 (1) shows the combinations starting from RG. FIG. 9 (2) shows the combinations starting from BG. FIG. 9 (3) shows the combinations starting from RB.

In the case of expressing one numerical value (for example, "3"), there are three ways to express it by the respective groups.

The coding specification is that, by the combination of two colors at the right end, a group of expressing the next numerical value is selected. In other words, combination of two colors at the right end instructs the following group.

By such specification, any of the numerical values 0 to 6 can be expressed by ON/OFF of three colors and, simultaneously, ON/OFF of only one color.

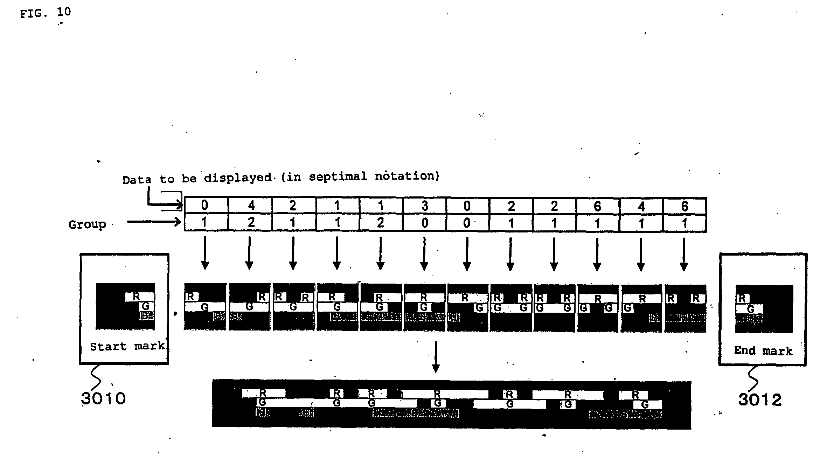

In FIG. 10, "0, 4, 2, 1, 1, 3, 0, 2, 2, 6, 4, 6" is data in septimal notation, which is to be expressed. Since the septimal notation is employed, the data is constructed by sequence of the numerical values 0 to 6.

Below the "numbers to be expressed", the numbers "1, 2, 1, 1, 2, 0, 0, 1, 1, 1, 1, 0" of the groups of the digit numbers are shown. The group numbers are the numbers of groups shown in FIG. 9.

In the specification, unless otherwise stated, the number is decimal number, or the numbers (0 to 6) which are the same in decimal number and septimal number.

For example, in FIG. 10, the first number "0" of the numbers "0, 4, 2, 1, 1, 3, 0, 2, 2, 6, 4, 6" to be expressed is selected from the group 1 (FIG. 9 (1)) . The combination corresponding to "0" is taken from FIG. 9 (1) and employed. Since the combination of "0" ends with GB (green and blue), a group to be used next is a group 2, that is, the group shown in FIG. 9 (2).

The number to be expressed is the second number "4" of the numbers "0, 4, 2, 1, 1, 3, 0, 2, 2, 6, 4, 6" to be expressed. The combination corresponding to "4" is selected from the group 2 (FIG. 9 (2)) and employed.

Similarly, the combination is selected for each of the digits. The result of selection is shown in the middle part of FIG. 10. In the combinations (each of which is made of three cells) shown in the middle part, naturally from the above-described choosing method, the cells at the right and left ends are the same as those at the ends of the neighboring cells for the following reason. A cell following a certain cell is selected from a group having a combination of colors similar to those at the right end of the certain cell.

Therefore, at the time of forming a final code symbol, cells of a combination of the same color are not displayed. Further, to form a final code symbol, "start" and "end" of the code symbol have to be instructed. By attaching a start mark 3010 at the left end and attaching an end mark 3012 at the right end as shown in FIG. 10, a final code symbol is constructed.

The final code symbol constructed as described above is shown in the lower part of FIG. 10.

If a color is interrupted or becomes long in such a case, usually, it appears as a rule violation of the code such as a change in the number of cells. Therefore, usually, occurrence of an error can be detected.

However, in the case where the position of a cell end changes for some reason with respect to "0" and "1", and "4" and "5" in each of the groups of the embodiment, there is the possibility that the values are interchanged.

For example, when the color band of R (red) becomes long in "0" of FIG. 9 (1), that is, when the ON state of R becomes long, there is the possibility that R overlaps with B (blue) . When the overlap occurs, the value may be read as "1". Obviously from FIG. 9, it may similarly occur in FIG. 9 (2) and FIG. 9 (3) .

For example, when the color band of B (blue) becomes long in "4" of FIG. 9 (2), that is, when the ON state of R becomes long, there is the possibility that B overlaps with R (red). When the overlap occurs, the value maybe read as "5". Obviously from FIG. 9, it may similarly occur in FIG. 9 (1) and FIG. 9 (3).

3-3 Method Proposed In The Embodiment

In the embodiment, paying attention to such a behavior unique to the 1 . 5D color bit code, a method of tightening security on such a part is proposed.

To provide security as efficiently as possible, a method of realizing security with the smallest number of check digits is proposed.

3-4 Reality of Check Digit

A method of providing security of the invention will be described below.

As already described, in the embodiment, numbers in patterns, which tend to change, are limited as much as possible. In the embodiment, there are three patterns (groups). Combinations of numbers in which an error tends to occur can be limited to "0 and 1" and "4 and 5" in any of the groups. A method of calculating check digits in the embodiment will be specifically described below.

First, for example, the case of a septimal number in 10 digits will be considered. The number is expressed as follows. 0000000000 to 6666666666 (in septimal notation)

Example 3-4-1

The case where only one of the numbers "0 and 1" and "4 and 5" which tend to change is included in the number of 10 digits (for example, 2222212222, 3232066232, or the like) will be examined.

In this case, generally, only one pattern (to be changed) which tends to be changed exists. 2222212222 in the above example tends to change to 2222202222.

3232066232 tends to change to 3232166232.

It is therefore sufficient to add, as check digits, a value which can take two kinds of values (for example, 0 and 1).

As it is sufficient to take two kinds of values, typically, it is preferable to add, for example, a parity (parity check) as a CD. When a parity is calculated and is different from the CD, occurrence of a change (read error) is determined.

For simplicity of explanation, a change which easily occurs in the check digit itself is not considered below.

In the embodiment, the example of providing security concentratedly to "0 and 1" and "4 and 5" which tend to change will be described, and a change in other numbers is not considered. As already described above, the possibility that any of the other numbers is erroneously read as another number due to dirt in printing or the like is low. If there is a case that dirt or deformation occurs in a code symbol to the degree that the number is erroneously read as another number, it is against a coding rule such as mismatch of the number of cells.

Therefore, in the embodiment, only the case where the position of an edge of a color changes without being against the coding rule is considered. An main object is to obtain a check digit capable of detecting such a case efficiently.

Example 3-4-2

In the case where all of 10 digits are numbers "0, 1" and "4, 5" which attend to change, a check digit of 0041010044 or the like is calculated by an algorithm described below.

(Step 1)

0 and 4 in the digits (septimal notation) is replaced with -1 and 1 and 5 are replaced with 1. The other numbers are replaced with 0. After that, the digits are re-arranged so that 0 is right-aligned and 1 and -1 are left-aligned.

Such"1", "-1", and "0" will be referred to as index values.

As a result of the replacement, "41010044" in the above example becomes "-1, -1, -1, 1, -1, 1, -1, -1, -1, -1". Since there is no 0 but all of the digits are either 1 or -1, there is no work of right-alignment and left-alignment.

The values of the digits "-1, -1, -1, 1, -1, 1, -1, -1, -1, -1" are replaced with a, b, c, d, e, f, g, h, i, and j. That is,

a = -1

b = -1

c = -1

d = 1

e = -1

f = 1

g = -1

h = -1

i = -1

j = -1

(Step 2)

Next, from the right digits (that is, from "j") as the lower-order digit, the sum of the value and its absolute value is multiplied with each of weights 1, 3, 5, ..., and the total sum of the resultants is calculated. That is, a weighted value is calculated. This will be referred to as a first weighted value k1.

Similarly, from the right digits (that is, from "j") as the lower-order digit, the sum of the absolute value of the value and the value is multiplied with each of weights 1, 3, 5, ..., and the total sum of the resultants is calculated. This will be referred to as a second weighted value k2.

Specifically, k1 and k2 are described as follows.

$$k1 = ((|j|+j)*1 + (|i|+i)*3 + (|h|+h)*5 + (|g|+g)*7 + (|f|+f)*9 + (|e|+e)*11 + (|d|+d)*13 + (|c|+c)*15 + (|b|+b)*17) + (|a|+a)*19)/2$$

$$k2 = ((|j|-j)*1 + (|i|-i)*3 + (|h|-h)*5 + (|g|-g)*7 + (|f|-f)*9 + (|e|-e)*11 + (|d|-d)*13 + (|c|-c)*15 + (|b|-b)*17) + (|a|-a)*19)/2$$

In the examples, since all of the index values are nonzero, all of the digits are weighted. In the case where there is a digit whose index value is zero, 1, 3, 5, ... are applied in order from the low order while skipping the digit. Such an example will be described later.

In the embodiment, a series of numbers (group) which sequentially increase like arithmetic progression are used as weights. As a result, occurrence of erroneous reading in a part where erroneous reading tends to occur can be efficiently detected.

(Step 4)

Next, a check digit (CD) is calculated as follows from the first and second weighted values k1 and k2 obtained as described above.

$$CD = mod(k1, \text{ int } ((k1+k2)/2)+16 - \text{ the number of nonzero digits*2})$$

where int (t) is an integer part of t, and the number of nonzero digits is the number of digits whose index value is nonzero.

As a result of calculation, the value of CD is 0 to 31 (in decimal number), and the check digit can be realized by using relatively small kinds of numbers for the reason that only a part where erroneous reading often occurs is detected.

The case of the above-described numerals 0041010044 will be actually calculated. Since a, b, c, d, e, f, g, h, i, and j are already obtained, weighted values k1 and k2 will be calculated.

$$k1 = ((|j|+j)*1 + (|i|+i)*3 + (|h|+h)*5 + (|g|+g)*7 + (|f|+f)*9$$
$$+ (|e|+e)*11 + (|d|+d)*13 + (|c|+c)*15 + (|b|+b)*17) +$$

$$(|a|+a)*19)/2$$
$$= (2*9 + 2*13)/2$$
$$= (18+26)/2$$
$$= 22$$

$$k2 = ((|j|-j)*1 + (|i|-i)*3 + (|h|-h)*5 + (|g|-g)*7 + (|f|-f)*9$$
$$+ (|e|-e)*11 + (|d|-d)*13 + (|c|-c)*15 + (|b|-b)*17) +$$
$$(|a|-a)*19)/2$$
$$= (2*1 + 2*3 + 2*5 + 2*7 + 2*11 + 2*15 + 2*17 + 2*19)/2$$
$$= (2 + 6 + 10 + 14 + 22 + 30 + 34 + 38)/2$$
$$= 78$$

Next, CD will be calculated from the above.

$$CD = mod (22, \text{ int } ((22+78)/2) + 16 - 20)$$
$$= mod (22, 46)$$
$$= 22$$

From the calculation, CD=22.

In the case of the method in the embodiment, it could be confirmed by simulation of the inventors of the present invention that the minimum error distance is 4 in any of the CD, in the numerical values having the same CD value. Even when an error that 0 is read as 1 occurs in three places at the same time, the CD values are different from each other, and occurrence of an error can be detected.

Example 3-4-3

Next, a similar algorithm will be calculated with respect to the case where six digits out of 10 digits are 0, 1 and 4, 5 which tend to change.
For example, 0042041553 (in the septimal notation) is used.
(1) First, 0 and 4 in the digits (in the septimal notation) are replaced with -1, and 1 and 5 are replaced with 1.
The other numbers are replaced with 0, 0 is left-aligned, and 1 and -1 are right-aligned as follows

$$0\ \ 0\ \ 4\ \ 2\ \ 0\ \ 4\ \ 1\ \ 5\ \ 5\ \ 3$$

$$\downarrow$$

$$-1,\ -1,\ -1,\ 0,\ -1,\ -1,\ 1,\ 1,\ 1,\ 0$$

$$\downarrow$$

$$0,\ 0,\ -1,\ -1,\ -1,\ -1,\ -1,\ 1,\ 1,\ 1$$

Therefore, the following is obtained.
a = 0
b = 0
c = -1
d = -1
e = -1
f = -1
g = -1
h = 1
i = 1
j = 1

The embodiment is **characterized in that** the index value of each of the numbers at which read error does not often occur is converted to 0. As a result, the values at which read error does not often occur are not related to calculation of a check digit. Security can be concentrated on values which can be erroneously read as other numerical values.
(2) Next, from the right digits, the digits are multiplied with 1, 3, 5, ..., and the weighted values k1 and k2 are calculated.
$$k1 = ((|j|+j)*1 + (|i|+i)*3 + (|h|+h)*5 + (|g|+g)*7 + (|f|+f)*9$$

$$+ (|e|+e)*11 + (|d|+d)*13 + (|c|+c)*15 + (|b|+b)*17) +$$

$$(|a|+a)*19)/2$$

$$= (2+6+10)/2$$

$$= 9$$

$$k2 = ((\left|j\right|-j)*1 + (\left|i\right|-i)*3 + (\left|h\right|-h)*5 + (\left|g\right|-g)*7 + (\left|f\right|-f)*9$$

$$+ (\left|e\right|-e)*11 + (\left|d\right|-d)*13 + (\left|c\right|-c)*15 + (\left|b\right|-b)*17) +$$

$$(\left|a\right|-a)*19)/2$$

$$= (14+18+22)/2$$

$$= 27$$

(3) A check digit (CD) is calculated from kl and k2.

$$CD = mod(k1, int ((k1+k2)/2)+16 -20)$$

$$= mod(18, int((18+54)/2 + 16 -20)$$

$$= mod(9, 14)$$

$$= 9$$

In such a manner, 9 is obtained as the CD. In this case as well, it could be confirmed that the minimum error distance is 4 in any of the CD, in the numerical values having the same CD value.

An example of the values of 10 digits (in the septimal notation) has been described. For other digits, a check digit (CD) can be also generated by a similar algorithm. For example, in the case of 12 digits (in septimal notation), CD values of 64 CDs from 0 to 63 can be used.

3-5 Computer and Software

The above-described series of processes is realized by making a computer execute a predetermined program. In this case, the computer servers as a 1.5D color bit code check digit calculating apparatus. When the computer performs the decoding process on a cut color area group and outputs original data, the computer can be referred to as a 1.5D color bit code recognizing apparatus.

As a result, means for executing the operation steps is realized by the computer. The means in the scope of claims is realized by making a computer execute a program. The processing operations in steps in the scope of claims are performed by making a computer execute a program.

Such an apparatus calculates a predetermined check digit for data to be expressed. In the case where data to be expressed is recorded on a recording medium, it may be received via the recording medium or it is also preferable to receive it via a network. It is preferable to output the calculated check digit as it is. It is suitable to construct a final 1.5D color bit code using the check digit and supply the 1.5D color bit code to the outside.

That is, preferably, the check digit calculating method and apparatus in the embodiment are independently used. Since those are techniques used at the scene of encoding, it is also preferable that the method and apparatus are housed (the program is installed) in the same apparatus as an encoding apparatus.

Preferably, such a program is stored in storing means such as a hard disk on a computer or the like and is also preferable to be stored in a storing medium such as a CD ROM, DVD ROM, or the like. It is also preferable to employ a form of pre-storing the program on a server and using the program from the server by a client computer.

As the decoding process, the conventional decoding process can be used as it is.

3-6 Modification

Although the 1.5D color bit code has been mainly described above as an example, the invention may be applied to an optical recognition code made of a plurality of color areas.

Particularly, in the case where a predetermined value indicated by a code easily changes to another value due to deviation of the periphery of a printing part of a color, it is also preferable to concentratedly secure the predetermined value. The present invention is also preferable for such an use.

In the above-described example, when a change occurs in the codes of "0 and 1" and "4 and 5", security can be provided concentratedly to "0 and 1" and "4 and 5". The existence of a read error can be determined more accurately.

In the case of employing another coding, obviously, numbers at which an error tends to occur may be other numbers. Since it is considered that the part (number) to which security is to be provided concentratedly varies generally, a place to which security is concentratedly provided has to be determined according to each of codings.

The abstract of the specification relates mainly to the first embodiment. Abstracts of the second and third embodiments are as follows.

Abstract of Second Embodiment

The present invention proposes the cutting method utilizing the 1.5D color bit code devised by the inventors of the present invention, resistive to distortion, blurring, variations, and the like of the dimension and shape, and simpler than the conventional two-dimensional barcode.

An image including a 1.5D color bit code is captured by image capturing means such as an area sensor. The image is divided into blue, red, green, and an achromatic color to generate color areas. By combining the color areas which are in contact with each other, a "color area group" is generated. As a result, an entire image is divided into some "color area groups". Depending on whether the number of color areas included in the color area group is correct or not, candidates are narrowed from the color area groups. The candidates are further narrowed according to, as a criterion, whether the number of intersection points of "lines" connecting the color areas of the same color included in the color area group is an even number or an odd number. The candidates are further narrowed by detecting whether the candidates match the arrangement rule of the 1.5D color bit codes or not, thereby obtaining a final object to be recognized. By decoding the final object, original data is obtained.

Abstract of Third Embodiment

The present invention provides the method of providing security which prevents erroneous reading on a part in which erroneous reading often occurs (part of a specific value) and the method of calculating a check digit realizing the security providing method while utilizing the advantages of the 1.5D color bit code devised by the inventors of the present invention.

The method includes a converting step for converting the value of each of digits of a number to be expressed by a 1.5D color bit code to a predetermined index value and a check digit calculating step of calculating a check digit based on a nonzero index value of the converted digit. In the converting step, to a pair of a first number of erroneous recognition and a second number of erroneous recognition, "1" is given as an index value to the first value, and "-l" is given as an index value to the second number. To the other numbers, "0" is given as an index value. In such a manner, security can be concentratedly provided to a part where an read error tends to occur.

**Claims**

1. An optical symbol (1020) comprising continuously arranged cells (1010) each including "n" pieces of elements (1012) from a first element to an n-th element,

   wherein a k-th element can be set in two states: a state where a color of a first group of colors is given, and a state where the color of the first group of colors is not given, where "n" is an integer of 3 or greater, and "k" is an integer from 1 to "n", wherein

   the cells (1010) are arranged such that the k-th element of a cell is adjacent to the k-th element of a neighboring cell,

   **characterized in that**

   if a color of the first group of colors is given to the k-th element, this color is the same for the k-th elements of the continuously arranged cells,

   if a color of the first group of colors is given to at least two elements of a cell, the colors of the at least two elements within the same cell are different from each other,

   for all cells except for the first and the last cell of the optical symbol, at least one element of the cell is in a state where the color of the first group of colors is given, and

   a state of one and only one of the "n" elements included in the neighboring cell changes from cell to cell.

**2.** The optical symbol (1020) according to claim 1, wherein
"n" is 3,
a first element (1012) can be set in two states: an ON state where R as a first color of the first group of colors is given, and an OFF state where R is not given,
a second element (1012) can be set in two states: an ON state where G as a second color of the first group of colors is given, and an OFF state where G is not given, and
a third element (1012) can be set in two states: an ON state where B as a third color of the first group of colors is given, and an OFF state where B is not given.

**3.** The optical symbol (1020) according to claim 1, wherein the cells (1010) include
end-point cells (1030) positioned at ends of a sequence of cells continuously arranged,
configuration cells (1034) indicative of data, positioned between the end-point cells(1030), and
neighboring cells (1032) neighboring the end-point cells(1030),
all of the elements in the end-point cells (1030) are in the OFF state,
the elements in the neighboring cell neighboring the end-point cell (1030) positioned in a start point are in a predetermined first state,
the elements in the neighboring cell neighboring the end-point cell (1030) positioned in an end point are in a predetermined second state,
the start point can be detected by detecting continuation of the cell whose elements are all in the OFF state and the cell whose elements are in the first state, and
the end point can be detected by detecting continuation of the cell whose elements are all in the OFF state and the cell whose elements are in the second state; or
wherein a sign indicated by the cell is determined according to states of elements of the cell and one or more cells connected to the cell; or
wherein a check, a notation, and the like are distinguished from each other by selection of the relation between the cell and the sign; or
wherein a color corresponding to an excessive light amount is not included in the k-th color depending on the kind of a light source for irradiating the optical symbol.

**4.** An item to which the optical symbol (1020) according any one of claims 1 to 3 is attached.

**5.** A code system using the optical symbol (1020) according to any one of claims 1 to 3.

**6.** A method of decoding the optical symbol (1020) according to any one of claims 1 to 3, comprising:

a step of capturing the optical symbol and obtaining image data of the optical symbol;
a step of retrieving end-point cells (1030) at a start point and an end point from the image data;
a step of tracing configuration cells (1034) provided between the two retrieved end-point cells (1030) at the start and end points based on the end-point cells; and
a step of decoding the traced configuration cells (1034).

**7.** The method of decoding the optical symbol (1020) according to claim 6, wherein, in the step of retrieving end-point cells (1030) at a start point and an end point,
in the case where the elements in a cell neighboring the end-point cell (1030) are in a predetermined first state, the end-point cell (1030) is determined to be an end-point cell indicative of a start point, and
in the case where the elements in a cell neighboring the end-point cell (1030) are in a predetermined second state, the end-point cell (1030) is determined to be an end-point cell indicative of an end point; or
wherein, in the step of tracing the configuration cells (1034), in the case where a change occurs in a state of one of the elements in a configuration cell (1034) at the time of scanning the image data and tracing the configuration cell, it is determined that the border between configuration cells is passed and the scanning and tracing has shifted to a new configuration cell.

**8.** A method of attaching the optical symbol (1020) according to any one of claims 1 to 3 to an item, comprising:

a step of generating the optical symbol based on data to be recorded; and
a step of attaching the generated optical symbol to a predetermined item,
wherein the attaching step includes any of a step of printing the optical symbol to the item, a step of attaching the optical symbol to an item by embroidery, and a step of attaching an adhesive seal on which the optical symbol is drawn to the item.

9. The optical symbol (1020) according to claim 1, wherein the state where a color of the first group of colors is not given comprises a state where either no color or a color of a second group of colors is given.

**Patentansprüche**

1. Optisches Symbol (1020) mit kontinuierlich angeordneten Zellen (1010), die jeweils "n" Stücke von Elementen (1012) von einem ersten Element zu einem n-ten Element umfassen,
wobei ein k-tes Element in zwei Zuständen gesetzt werden kann: einem Zustand, in dem eine Farbe einer ersten Gruppe von Farben gegeben ist, und einem Zustand, in dem die Farbe der ersten Gruppe von Farben nicht gegeben ist, wobei "n" eine Ganzzahl von 3 oder größer ist, oder "k" eine Ganzzahl von 1 bis "n" ist, wobei
die Zellen (1010) derart angeordnet sind, dass das k-te Element einer Zelle neben dem k-ten Element einer benachbarten Zelle liegt,
**dadurch gekennzeichnet, dass**
wenn eine Farbe der ersten Gruppe von Farben dem k-ten Element gegeben ist, diese Farbe die gleiche für die k-ten Elemente der kontinuierlich angeordneten Zellen ist,
wenn eine Farbe der ersten Gruppe von Farben zu zumindest zwei Elementen einer Zelle gegeben ist, die Farben der zumindest zwei Elemente innerhalb der gleichen Zelle voneinander verschieden sind,
für alle Zellen außer der ersten und der letzten Zelle des optischen Symbols zumindest ein Element der Zelle in einem Zustand ist, in dem die Farbe der ersten Gruppe von Farben gegeben ist, und
ein Zustand von einer und nur einer der "n" Elemente, die in der benachbarten Zelle umfasst sind, sich von Zelle zu Zelle ändert.

2. Optisches Symbol (1020) gemäß Anspruch 1, wobei
"n" gleich 3 ist,
ein erstes Element (1012) in zwei Zuständen gesetzt werden kann: einem AN-Zustand, in dem R als eine erste Farbe der ersten Gruppe von Farben gegeben ist, und einem AUS-Zustand, in dem R nicht gegeben ist,
ein zweites Element (1012) in zwei Zuständen gesetzt werden kann: einem AN-Zustand, in dem G als eine zweite Farbe der ersten Gruppe von Farben gegeben ist, und einem AUS-Zustand, in dem G nicht gegeben ist, und
ein drittes Element (1012) in zwei Zuständen gesetzt werden kann: einem AN-Zustand, in dem B als eine dritte Farbe der ersten Gruppe von Farben gegeben ist, und einem AUS-Zustand, in dem B nicht gegeben ist.

3. Optisches Symbol (1020) gemäß Anspruch 1, wobei die Zellen (1010) umfassen
Endpunktzellen (1030), die an Enden einer Sequenz von kontinuierlich angeordneten Zellen positioniert sind,
Konfigurationszellen (1034), die Daten angeben, die zwischen den Endpunktzellen (1030) positioniert sind, und
benachbarte Zellen (1032), die zu den Endpunktzellen (1030) benachbart sind,
alle der Elemente in den Endpunktzellen (1030) in dem AUS-Zustand sind,
die Elemente in den benachbarten Zellen, die zu der Endpunktzelle (1030) benachbart sind, die an einem Startpunkt positioniert ist, in einem vorbestimmten ersten Zustand sind,
die Elemente in den benachbarten Zellen, die zu der Endpunktzelle (1030) benachbart sind, die an einem Endpunkt positioniert ist, in einem vorbestimmten zweiten Zustand sind;
der Startpunkt erfasst werden kann, durch Erfassen einer Fortsetzung der Zelle, dessen Elemente alle in dem AUS-Zustand sind, und der Zelle, dessen Elemente in dem ersten Zustand sind, und
der Endpunkt erfasst werden kann, durch Erfassen der Fortsetzung der Zelle, dessen Elemente alle in dem AUS-Zustand sind, und der Zelle, dessen Elemente in dem zweiten Zustand sind; oder
wobei ein Vorzeichen, das durch die Zelle angegeben wird, gemäß Zuständen von Elementen der Zelle und einer oder mehrerer Zellen, die mit der Zelle verbunden sind, bestimmt wird; oder
wobei eine Überprüfung, eine Notation und Ähnliches durch eine Auswahl der Beziehung zwischen der Zelle und dem Vorzeichen voneinander unterschieden werden; oder
wobei eine Farbe entsprechend einer übermäßigen Lichtmenge in der k-ten Farbe nicht enthalten ist, in Abhängigkeit der Art einer Lichtquelle zum Bestrahlen des optischen Symbols.

4. Artikel, an dem das optische Symbol (1020) gemäß einem der Ansprüche 1 bis 3 angebracht ist.

5. Codesystem unter Verwendung des optischen Symbols (1020) gemäß einem der Ansprüche 1 bis 3.

**6.** Verfahren des Dekodierens des optischen Symbols (1020) gemäß einem der Ansprüche 1 bis 3, mit:

einem Schritt des Aufnehmens des optischen Symbols und des Erhaltens von Bilddaten des optischen Symbols;
einem Schritt des Auffindens von Endpunktzellen (1030) an einem Startpunkt und einen Endpunkt von den Bilddaten;
einem Schritt des Verfolgens von Konfigurationszellen (1034), die zwischen den zwei aufgefundenen Endpunktzellen (1030) an den Start- und Endpunkten bereitgestellt sind, basierend auf den Endpunktzellen; und
einem Schritt des Dekodierens der verfolgten Konfigurationszellen (1034).

**7.** Verfahren des Dekodierens des optischen Symbols (1020) gemäß Anspruch 6, wobei, in dem Schritt des Auffindens von Endpunktzellen (1030) an einem Startpunkt und einem Endpunkt,
in dem Fall, in dem die Elemente in einer Zelle, die zu der Endpunktzelle (1030) benachbart ist, in einem vorbestimmten ersten Zustand sind, bestimmt wird, dass die Endpunktzelle (1030) eine Endpunktzelle ist, die einen Startpunkt angibt, und
in dem Fall, in dem die Elemente in einer Zelle, die zu der Endpunktzelle (1030) benachbart ist, in einem vorbestimmten zweiten Zustand sind, bestimmt wird, dass die Endpunktzelle (1030) eine Endpunktzelle ist, die einen Endpunkt angibt; oder
wobei, in dem Schritt des Verfolgens der Konfigurationszellen (1034), in dem Fall, in dem eine Änderung in einem Zustand von einem der Elemente in einer Konfigurationszelle (1034) zur Zeit des Abtastens der Bilddaten und des Verfolgens der Konfigurationszelle auftritt, es bestimmt wird, dass die Grenze zwischen Konfigurationszellen passiert wird und das Abtasten und Verfolgen sich zu einer neuen Konfigurationszelle verschoben hat.

**8.** Verfahren des Anbringens des optischen Symbols (1020) gemäß einem der Ansprüche 1 bis 3 an einem Artikel, mit:

einem Schritt des Erzeugens des optischen Symbols basierend auf Daten, die aufzuzeichnen sind;
einem Schritt des Anbringens des erzeugten optischen Symbols an einen vorbestimmten Artikel,
wobei der Anbringschritt irgendeinen eines Schritts des Druckens des optischen Symbols auf den Artikel, einen Schritt des Anbringens des optischen Symbols an einem Artikel durch Sticken, und einen Schritt des Anbringens eines haftenden Siegels, auf dem das optische Symbol gezeichnet ist, an dem Artikel umfasst.

**9.** Optisches Symbol (1020) gemäß Anspruch 1, wobei der Zustand, in dem eine Farbe der ersten Gruppe von Farben nicht gegeben ist, einen Zustand umfasst, in dem entweder keine Farbe oder eine Farbe einer zweiten Gruppe von Farben gegeben ist.

**Revendications**

**1.** Symbole optique (1020) comprenant des cellules (1010) à agencement continu chacune comportant "n" morceaux d'éléments (1012) en allant d'un premier élément jusqu'à un n-ième élément,
dans lequel un k-ième élément peut être réglé dans deux états : un état où une couleur d'un premier groupe de couleurs est donnée, et un état où la couleur du premier groupe de couleurs n'est pas donnée, où "n" est un entier de 3 ou plus, et "k" est un entier de 1 à "n", où
les cellules (1010) sont disposées de sorte que le k-ième élément d'une cellule soit adjacent au k-ième élément d'une cellule voisine,
**caractérisé en ce que**
si une couleur du premier groupe de couleurs est donnée au k-ième élément, cette couleur serait la même pour les k-ième éléments des cellules à agencement continu,
si une couleur du premier groupe de couleurs est donnée à au moins deux éléments d'une cellule, les couleurs des au moins deux éléments dans la même cellule seront différentes entre elles,
pour toutes les cellules à l'exception de la première et de la dernière cellule du symbole optique, au moins un élément de la cellule se trouve dans un état où la couleur du premier groupe de couleurs est donnée, et
un état d'un et d'un seul élément parmi les "n" éléments inclus dans la cellule voisine change de cellule à cellule.

**2.** Symbole optique (1020) selon la revendication 1, dans lequel
"n" est 3,
un premier élément (1012) peut être réglé dans deux états : un état MARCHE où R, comme première couleur du premier groupe de couleurs, est donnée, et un état ARRET où R n'est pas donnée,
un deuxième élément (1012) peut être réglé dans deux états : un état MARCHE où G comme deuxième couleur du premier groupe de couleurs est donnée, et un état ARRET où G n'est pas donnée, et
un troisième élément (1012) peut être réglé dans deux états : un état MARCHE où B comme troisième couleur du premier groupe de couleurs est donnée, et un état ARRET où B n'est pas donnée.

3. Symbole optique (1020) selon la revendication 1, dans lequel les cellules (1010) comportent
des cellules (1030) de points d'extrémités positionnées au niveau d'extrémités d'une séquence de cellules à agencement continu,
des cellules de configuration (1034) indiquant des données, positionnées entre les cellules (1030) de points d'extrémités, et
des cellules voisines (1032) avoisinant les cellules (1030) de points d'extrémités,
tous les éléments dans les cellules (1030) de points d'extrémités sont dans l'état ARRET,
les éléments dans la cellule avoisinant la cellule (1030) de points d'extrémités positionnée dans un point de départ sont dans un premier état prédéterminé,
les éléments dans la cellule voisine avoisinant la cellule (1030) de points d'extrémités positionnée dans un point d'extrémité sont dans un deuxième état prédéterminé,
le point de départ peut être détecté en détectant la continuation de la cellule dont les éléments sont tous dans l'état ARRET et la cellule dont les éléments sont dans le premier état, et
le point d'extrémité peut être détecté en détectant la continuité de la cellule dont les éléments sont tous dans l'état ARRET et la cellule dont les éléments sont dans le deuxième état ; ou
où un signe indiqué par la cellule est déterminé selon des états d'éléments de la cellule et une ou plusieurs cellules connectées à la cellule ; ou
où une vérification, une notation, et autres similaires sont distinguées les unes des autres par le choix de la relation entre la cellule et le signe ; ou
où une couleur correspondant à une quantité de lumière en excès n'est pas incluse dans la k-ième couleur en fonction du type de source de lumière destinée à irradier le symbole optique.

4. Article auquel est fixé le symbole optique (1020) selon l'une quelconque des revendications 1 à 3.

5. Système de codage utilisant le symbole optique (1020) selon l'une quelconque des revendications 1 à 3.

6. Procédé destiné à décoder le symbole optique (1020) selon l'une quelconque des revendications 1 à 3, comprenant :

   une étape qui consiste à capturer le symbole optique et à obtenir des données d'image du symbole optique ;
   une étape qui consiste à récupérer des cellules (1030) de points d'extrémités au niveau d'un point de départ et d'un point d'extrémité à partir des données d'image ;
   une étape qui consiste à tracer des cellules de configuration (1034) prévues entre les deux cellules (1030) de points d'extrémité récupérées au niveau des points d'extrémité et de départ sur les cellules de points d'extrémités ; et
   une étape qui consiste à décoder les cellules de configuration (1034) tracées.

7. Procédé destiné à décoder le symbole optique (1020) selon la revendication 6, où, dans l'étape qui consiste à récupérer des cellules (1030) de points d'extrémités au niveau d'un point de départ et d'un point d'extrémité,
dans le cas où les éléments dans une cellule avoisinant la cellule (1030) de points d'extrémités sont dans un premier état prédéterminé, on détermine que la cellule (1030) de points d'extrémités est une cellule de point d'extrémité indiquant un point de départ, et
dans le cas où les éléments dans une cellule avoisinant la cellule (1030) de points d'extrémités sont dans un deuxième état prédéterminé, on détermine que la cellule (1030) de points d'extrémités est une cellule de point d'extrémité indiquant un point d'extrémité ; ou
où, dans l'étape qui consiste à tracer des cellules de configuration (1034), dans le cas où un changement se produit dans un état d'un des éléments dans une cellule de configuration (1034) au moment du balayage des données de l'image et du traçage de la cellule de configuration, on détermine que la limite entre les cellules de configuration est franchie et que le balayage et le traçage sont déplacés vers une nouvelle cellule de configuration.

8. Procédé destiné à fixer à un article le symbole optique (1020) selon l'une quelconque des revendications 1 à 3, comprenant :

   une étape qui consiste à générer le symbole optique sur la base de données à enregistrer ; et
   une étape qui consiste à fixer le symbole optique généré à un article prédéterminé,

où l'étape de fixation comporte l'une d'une étape d'impression du symbole optique à l'article, une étape de fixation du symbole optique à un article par broderie, et une étape de fixation à l'article d'un joint adhésif sur lequel le symbole optique est dessiné.

9. Symbole optique (1020) selon la revendication 1, dans lequel l'état où une couleur du premier groupe de couleurs n'est pas donnée comprend un état où soit aucune couleur n'est donnée ou une couleur du deuxième groupe de couleurs (n') est donnée.

FIG.1

FIG. 2

R: RED
G: GREEN
B: BLUE

FIG.3

FIG. 4"

2010

2010

BCORE

FIG. 5

EP 2 043 026 B1

2020

2020

2020

2020

2020

2020

2020: Color area

FIG. 6

2030b

2030c

2030a

2030f

2030e: Color area group

2030d

EP 2 043 026 B1

FIG. 7

EP 2 043 026 B1

FIG. 8

8/10

2030a

2030b

2030c

Lines of three
colors intersect

The number of bars
is over the number

2030f

White exists in center

2030e

2030d

EP 2 043 026 B1

FIG. 9

FIG. 10

Data to be displayed (in septimal notation)

| 0 | 4 | 2 | 1 | 1 | 3 | 0 | 2 | 2 | 6 | 4 | 6 |
|---|---|---|---|---|---|---|---|---|---|---|---|
| 1 | 2 | 1 | 1 | 2 | 0 | 0 | 1 | 1 | 1 | 1 | 1 |

Group →

Start mark

3010

End mark

3012

# EP 2 043 026 B1

**REFERENCES CITED IN THE DESCRIPTION**

**Patent documents cited in the description**

- JP 2006196548 A
- WO 9845799 A
- JP S63255783 B
- WO 2521088 A
- JP 2002342702 A
- JP 2003178277 A
- JP 2004326582 A
- JP 2001088361 A
- JP 2003323585 A
- JP 2005310150 A
- JP 2005310148 A
- WO 3908250 A